# DEMANDE DE BREVET EUROPEEN

(11) **EP 2 130 441 A1**
(43) Date de publication de la demande: **09.12.2009**
(21) Numéro de dépôt: 09007106.9
(22) Date de dépôt: 28.05.2009
(51) Int. Cl.: A23L 1/10, A21D 13/00, A21D 13/04, A23L 1/308

(54) **Préparation alimentaire à base de céréales, principalement de son d'avoine pour la fabrication industrielle de produits alimentaires**

(30) Priorité: 02.06.2008 FR 0803011; 09.07.2008 FR 0803909
(71) Demandeur: NDV Dual Limited, London EC3V 0EH (GB)
(72) Inventeur: Dukan, Pierre, 75008 Paris (FR)
(74) Mandataire: Chaffraix, Jean

(57) **Abrégé**

L'invention concerne une préparation alimentaire à base de céréales pour la fabrication industrielle de produits alimentaires.

L'invention consiste en ce que les céréales comportent du son d'avoine dans une teneur d'au moins 85% de la teneur globale en céréales, et sont mélangées à au moins un composant fluide dont la teneur et le temps d'imprégnation desdites céréales sont choisis pour provoquer une demi-saturation en fluide des fibres du son d'avoine, et comportant en outre au moins un agent favorisant la prise en masse de la préparation lors de la cuisson.

Application aux produits alimentaires tels que galettes, crêpes, blinis et similaires.

## Description

La présente invention concerne une préparation alimentaire à base de céréales, principalement de son d'avoine pour la préparation industrielle de produits alimentaires tels que des galettes, crêpes, blinis ainsi qu'un procédé de fabrication de produits alimentaires tels que des galettes, crêpes, blinis utilisant une telle préparation alimentaire.

Le son d'avoine représente l'enveloppe fibreuse externe de l'avoine, et représentant la partie pauvre de cette céréale, elle a souvent été destinée à l'alimentation animale ainsi qu'à la confection de matelas.

Depuis les années 50, on s'est rendu compte que les fibres végétales alimentaires dénuées de saveurs et non assimilables par l'organisme humain détenaient des propriétés physiologiques capables de leur faire jouer un rôle nouveau dans la prévention des facteurs de risques issus des modes de vie d'abondance.

Ainsi, les cardiologues ont démontré l'intérêt du son d'avoine dans la réduction du cholestérol sanguin grâce à la présence des fibres solubles que sont les bêta-glucanes: Les diabétologues ont clairement établi que le son d'avoine réduisait la vitesse d'assimilation des sucres rapides et réduisait de ce fait, les pics glycémiques et insuliniques qui fragilisent le pancréas. Les gastroentérologues savent que le son d'avoine régule le transit intestinal et les cancérologues ont prouvé que les fibres en général réduisaient la fréquence du cancer du colon, premier cancer masculin chez les consommateurs réguliers de fibres de son et de son d'avoine en particulier, beaucoup moins irritant que les autres fibres.

Enfin, les nutrionnistes ont découvert que le son d'avoine à certaines conditions de mouture, de texture, d'hydratation, de mode, de type et de temps de cuisson permettait de, créer une déperdition calorique du bol intestinal se soldant par un allégement en aval de l'alimentation, extrêmement précieux dans la lutte contre le surpoids, classé sixième fléau du genre humain par l'Organisation Mondiale de la Santé.

On sait préparer dans le registre de la pâtisserie familiale ou artisanale des crêpes, des galettes ou des blinis. On sait aussi utiliser des céréales de tous types dans l'industrie en se servant d'une base de blé, permettant de réaliser la panification. Cependant, à ce jour, il n'a jamais été proposé de fabriquer industriellement un produit alimentaire cuit ne contenant pour seul ingrédient végétal que le seul son d'avoine, sans ajout de blé et préparé sans matière grasse non plus.

En effet, la trame végétale extrêmement absorbante du son d'avoine provoque l'obstruction des circuits d'injection de pâte industriels. De plus, le son d'avoine manque de la consistance et de l'élasticité nécessaire pour que ces préparations puissent être cuites et produites sur des tapis de cuisson et retournées pour une cuisson bilatérale.

En outre, l'adjonction de tout type de matière grasse, de jaune d'oeuf et surtout une hydratation insuffisante ou excessive conduisent à une perte de ses propriétés médicinales qui font sa spécificité et son intérêt.

Afin de pallier ces inconvénients, la présente invention propose donc une préparation alimentaire telle qu'une pâte pour la préparation industrielle de produits alimentaires tels que des galettes, des crêpes, des blinis, à base de céréales constituées principalement de son d'avoine, qui permet de fabriquer ces produits alimentaires en garantissant les saveurs et les propriétés médicinales des molécules de béta-glucanes que l'on trouve dans le son d'avoine tout en permettant la mise en oeuvre industrielle et en respectant les contraintes de fabrication industrielle.

Ainsi, l'invention a pour objet une préparation alimentaire à base de céréales pour la fabrication industrielle de produits alimentaires, **caractérisée en ce que** les céréales comportent du son d'avoine dans une teneur d'au moins 85% de la teneur globale en céréales, et sont mélangées à au moins un composant fluide dont la teneur et le temps d'imprégnation desdites céréales sont choisis pour provoquer une demi-saturation en fluide des fibres du son d'avoine, et comportant en outre au moins un agent favorisant la prise en masse de la préparation lors de la cuisson.

Ainsi, de manière avantageuse, on propose une préparation comportant des céréales constituées principalement de son d'avoine, dont la teneur en son d'avoine représente au moins 85% de la teneur globale en céréales. Ainsi, la préparation peut incorporer d'autres céréales comme du blé, de l'orge, de l'épeautre, etc., seul ou en mélange, dans une teneur ne dépassant pas 15% de la teneur globale en céréales.

De manière préférée, la préparation peut contenir exclusivement du son d'avoine en tant que céréales. Une telle préparation est particulièrement appropriée pour les consommateurs souffrant d'allergie au gluten, les céréales étant exclusivement constituées de son d'avoine.

De plus, dans la préparation selon l'invention, la teneur en composant fluide tel que de l'eau, mais également un produit laitier fluide, permet une imprégnation contrôlée du son d'avoine fixant notamment le poids et le volume de la préparation qui sera ensuite utilisable dans une chaîne industrielle de fabrication sans que la viscosité de la pâte ainsi obtenue ne soit un obstacle à son utilisation dans une installation industrielle.

Le son d'avoine présente une mouture choisie de sorte que les paillettes de son d'avoine ne soient ni trop fines ni trop grandes. Cette mouture dite de pré-trempage garantit l'effet de captation et d'adhésivité des fibres responsables de l'effet de déperdition calorique par pillage et allègement recherchés du bol intestinal.

De préférence, le composant fluide est de l'eau, un produit laitier tel que du lait, du fromage blanc.

L'agent favorisant la prise en masse de la préparation lors de la cuisson est de manière préférée un agent gélifiant à chaud irréversible choisi dans le groupe des gélifiants formé par le blanc d'oeuf, les isolats ou concentrats de protéines végétales, les protéines laitières en particulier les caséinates, et leurs dérivés, pris individuellement ou en combinaison.

De manière préférée, on utilise le blanc d'oeuf, pauvre en graisses.

On peut également envisager que l'agent gélifiant à chaud est de type réversible choisi de préférence dans le groupe formé par les méthylcelluloses et leurs dérivés.

On peut également utiliser un agent gélifiant à froid choisi dans le groupe des gélifiants formé par les extraits d'algues, en particulier les carraghénanes, les gommes tels que l'agar agar, les farines de graine, les pectines, la gélatine, et leurs dérivés, pris individuellement ou en combinaison.

Parmi les gommes, on choisira l'agar-agar, en tant qu'agent favorisant en outre chez les consommateurs la satiété, ce qui améliore encore les propriétés diététiques du produit que l'on souhaite fabriquer. L'agar-agar est ainsi ajouté de préférence dans une proportion entre 1 et 1,25% de la proportion du son d'avoine ce qui permet de potentialiser les effets médicinaux recherchés sans entraîner une perte de consistance gustative et une gélification trop importante de la préparation qui empêcherait son utilisation dans une installation de fabrication industrielle.

La préparation selon l'invention peut en outre comporter des agents de saveurs tels que des édulcorants, des arômes naturels ou artificiels, des aromates, des épices.

Ainsi, les édulcorants sont choisis parmi ceux dont le pouvoir sucrant résiste à la cuisson, tels que l'aspartame, la saccharine, le cyclamate, le sucralose, les polyols.

On peut utiliser en tant qu'arôme naturel de la vanille, du cacao dégraissé, etc.

De préférence, la préparation peut également renfermer un agent à pouvoir émulsifiant et liant tel que du jaune d'oeuf dont la teneur dans le mélange est choisie pour que l'apport en cholestérol reste dans les normes accessibles à n'importe quel consommateur.

La préparation selon l'invention peut en outre comporter tout agent qui serait nécessaire et connu de manière classique en soi tel que des levures par exemple.

De manière avantageuse, l'invention concerne également un procédé de fabrication de produits alimentaires sous forme de galette tels que galettes, crêpes, blinis, **caractérisé en ce qu**'il comprend les étapes de fabrication d'une préparation à base de céréales constituées de son d'avoine dans une teneur représentant au moins 85% de la teneur globale en céréales consistant à : mélanger les céréales avec au moins un composant fluide pour imprégnation desdites céréales avec ledit composant fluide et au moins un agent favorisant la prise en masse de la préparation lors de la cuisson, la teneur et le temps d'imprégnation étant choisis pour provoquer une demi-saturation en fluide des fibres du son d'avoine, puis les étapes consistant à déposer ladite préparation sur une surface pour la cuisson et cuire ladite préparation sur au moins une face.

De manière avantageuse, la préparation se présente sous la forme d'une pâte et est déposée en pièces de forme et de dimensions voulues pour constituer des produits alimentaires tels que des galettes, des crêpes, des blinis, des bases de tartes ou de pizza, de pains et similaires.

De manière alternative, la préparation peut être déposée en bande pour la cuisson puis peut ensuite être découpée à la forme et aux dimensions voulues.

Le temps de cuisson est avantageusement choisi pour conférer au produit (galette, crêpe, etc) sa consistance sans dénaturer par vitrification, les molécules de béta-glucanes qui lui confèrent ses propriétés médicinales.

La température de cuisson, notamment la température de surfaces de cuisson par exemple, est avantageusement choisie pour permettre le saisissement et le lissage à la surface pour une cuisson sans matière grasse ajoutée sur les surfaces de cuisson. De préférence, la cuisson est réalisée sur les deux faces.

Grâce à la préparation et au procédé selon l'invention, on obtient un produit alimentaire à base de son d'avoine dont les propriétés médicinales liées aux molécules de bêta-glucanes ont été préservées et optimisées grâce un choix judicieux de la mouture du son d'avoine fixant le poids et le volume de la préparation prêt à cuire,au temps de cuisson, à la température des surfaces de cuisson ainsi qu'au choix des composants utilisés tels que l'édulcorant, la teneur en agar agar, en produit laitier, en blanc d'oeuf et en jaune d'oeuf .

On décrira maintenant l'invention plus en détail en préférence à un exemple de réalisation dans lequel on prépare une galette de son d'avoine édulcorée présentant les propriétés médicinales souhaitées du son d'avoine.

Ainsi, on prépare un mélange contenant 30g de son d'avoine sans germe, 40 g de fromage blanc maigre à 0% de matière grasse, une cuillère à soupe d'eau soit environ 5cc, un blanc d'oeuf, 1/3 de jaune d'oeuf, de 1 et 0,5 g d'agar-agar en paillettes à mouture extra fine.

Le temps d'imbibition et de solubilisation est de 1 minute et 45 secondes à température ambiante ce qui permet de provoquer une demi-saturation en fluide (fromage blanc, eau) des fibres du son d'avoine.

La pâte est ensuite mise en oeuvre sous forme de galette qui est cuite sur chaque face pendant entre 30 et 80 secondes selon le matériel, la température et le temps de cuisson. Le poids avant cuisson d'une telle galette est de 110g et après cuisson de 97g.

L'invention n'est pas limitée à l'exemple décrit mais englobe toute la variantes définies dans les revendications dépendantes.

## Revendications

1. Préparation alimentaire à base de céréales pour la fabrication industrielle de produits alimentaires,
**caractérisée en ce que** les céréales comportent du son d'avoine dans une teneur d'au moins 85% de la teneur globale en céréales, et sont mélangées à au moins un composant fluide dont la teneur et le temps d'imprégnation desdites céréales sont choisis pour provoquer une demi-saturation en fluide des fibres du son d'avoine, et comportant en outre au moins un agent favorisant la prise en masse de la préparation lors de la cuisson.

2. Préparation alimentaire selon la revendication 1,
**caractérisée en ce que** les céréales sont exclusivement constituées de son d'avoine.

3. Préparation alimentaire selon l'une des revendications 1 et 2,
**caractérisée en ce que** le composant fluide est de l'eau, un produit laitier tel que du lait, du fromage blanc.

4. Préparation alimentaire selon l'une des revendications 1 à 3,
**caractérisée en ce que** l'agent favorisant la prise en masse de la préparation lors de la cuisson est un agent gélifiant à chaud irréversible choisi dans le groupe des gélifiants formé par le blanc d'oeuf, les isolats ou concentrats de protéines végétales, les protéines laitières en particulier les caséinates, et leurs dérivés, pris individuellement ou en combinaison.

5. Préparation alimentaire selon l'une des revendications 1 à 3,
**caractérisée en ce que** l'agent favorisant la prise en masse de la préparation lors de la cuisson est un agent gélifiant à chaud de type réversible choisi de préférence dans le groupe formé par les méthylcelluloses et leurs dérivés.

6. Préparation alimentaire selon l'une des revendications 1 à 3,
**caractérisée en ce que** l'agent favorisant la prise en masse de la préparation lors de la cuisson est un agent gélifiant à froid choisi dans le groupe des gélifiants formé par les extraits d'algues, en particulier les carraghénanes, les gommes tels que l'agar agar, les farines de graine, les pectines, la gélatine, et leurs dérivés, pris individuellement ou en combinaison.

7. Préparation alimentaire selon la revendication 6,
**caractérisée en ce que** la teneur en agar-agar est entre 1 et 1,25% de la proportion du son d'avoine.

8. Préparation alimentaire selon l'une des revendications 1 à 7,
**caractérisée en ce qu'**elle comporte des agents de saveurs tels que des édulcorants, des arômes naturels ou artificiels tels que de la vanille, du cacao dégraissé, des aromates, des épices.

9. Préparation alimentaire selon la revendication 8,
**caractérisée en ce que** les édulcorants sont choisis parmi ceux dont le pouvoir sucrant résiste à la cuisson, tels que l'aspartame, la saccharine, le cyclamate, le sucralose, les polyols.

10. Procédé de fabrication de produits alimentaires sous forme de galette tels que galettes, crêpes, blinis, des bases de tartes ou de pizzas, des pains, et similaires,
**caractérisé en ce qu'**il comprend les étapes de fabrication d'une préparation à base de céréales constituées de son d'avoine dans une teneur représentant au moins 85% de la teneur globale en céréales selon l'une des revendications 1 à 9, consistant à : mélanger les céréales avec au moins un composant fluide pour imprégnation desdites céréales avec ledit composant fluide et au moins un agent favorisant la prise en masse de la préparation lors de la cuisson, la teneur et le temps d'imprégnation étant choisis pour provoquer une demi-saturation en fluide des fibres du son d'avoine,
puis les étapes consistant à déposer ladite préparation sur une surface pour la cuisson et cuire ladite préparation sur au moins une face.

11. Procédé selon la revendication 10,
**caractérisé en ce que** la préparation est déposée en bande pour la cuisson puis est découpée à la forme et aux dimensions voulues.

12. Procédé selon la revendication 10,
**caractérisé en ce que** la préparation est déposée pour la cuisson en pièces de forme et de dimensions voulues.

13. Procédé selon l'une des revendications 10 à 12,
**caractérisé en ce que** le temps de cuisson est choisi pour conférer au produit sa consistance sans dénaturer par vitrification, les molécules de béta-glucanes.

14. Procédé selon l'une des revendications 10 à 13,
**caractérisé en ce que** la température de cuisson, notamment la température de surfaces de cuisson, est choisie pour permettre le saisissement et le lissage à la surface pour une cuisson sans matière grasse ajoutée sur les surfaces de cuisson, de préférence sur les deux faces.

15. Produit alimentaire tels que des galettes, des crêpes, des blinis, des base de tartes ou pizza, de pains, obtenu à partir d'une préparation selon l'une des revendications 1 à 9 et par le procédé selon l'une des revendications 10 à 14.
